# EUROPÄISCHE PATENTANMELDUNG

(11) **EP 1 520 551 A2**
(43) Veröffentlichungstag der Anmeldung: **06.04.2005**
(21) Anmeldenummer: 04020363.0
(22) Anmeldetag: 27.08.2004
(51) Int. Cl.: A61C 13/34, A61C 1/08, A61C 19/055

(54) **Arbeitstisch für Zahntechniker und Zahnärzte**

(30) Priorität: 01.10.2003 DE 10346129
(71) Anmelder: Dr.-medic-stom./UMF Temeschburg, Herbert Hatzlhoffer, 76337 Waldbronn (DE)
(72) Erfinder: Dr.-medic-stom./UMF Temeschburg, Herbert Hatzlhoffer, 76337 Waldbronn (DE)
(74) Vertreter: Blumenröhr, Dietrich

(57) **Zusammenfassung**

Die Erfindung betrifft einen Arbeitstisch für Zahntechniker und Zahnärzte und insbesondere zur Erstellung einer Implantats-Bohrschablone mit einer ein Werkstück (8) zumindest mittelbar tragenden unteren Grundplatte (1) und einer relativ zur unteren Grundplatte (1) beweglich angeordneten Werkzeugaufnahme (7), wobei die bewegliche Anordnung derart ausgebildet ist, dass die Werkzeugaufnahme (7) gegenüber dem Werkstück (8) um zumindest vier Schwenkachsen (F, E, C, B) schwenkbar und in Richtung zumindest einer Translationsachse (D) verschieblich angeordnet ist. Außerdem wird ein Verfahren zur Verwendung des Arbeitstischs vorgeschlagen.

## Beschreibung

Die Erfindung betrifft einen Arbeitstisch für Zahntechniker und Zahnärzte und insbesondere zur Erstellung einer Implantats-Bohrschablone mit einer ein Werkstück zumindest mittelbar tragenden unteren Grundplatte und einer relativ zur unteren Grundplatte beweglich angeordneten Werkzeugaufnahme.

Bohrschablonen sind Hilfsvorrichtungen, um dem Zahnarzt das Einbringen einer Bohrung in den Kieferknochen eines Patienten, in die das Implantat eingesetzt werden soll, zu erleichtern. Die Bohrschablone weist ein am Kiefermodell erstelltes Bohrloch auf, das beim Einbringen der Bohrung in den Kieferknochen als Führung für den Bohrer fungiert. Zweckmäßigerweise besitzt das Bohrloch die richtige Position und Winkellage. Eine solche Bohrschablone ist beispielsweise in der DE-A 10162366 offenbart.

Im Stand der Technik sind verschiedene Arbeitstische zur Herstellung von Bohrschablonen bekannt. So ist beispielsweise in der DE-A 197 09 215 eine Vorrichtung und ein System zur Herstellung einer Bohrschablone für Implantatzähne offenbart mit einem feststehenden Rahmen, auf dem ein Kiefermodell mit Bohrschablone um eine Vertikalachse drehbar und in Horizontalebene in zwei zueinander senkrechte Richtungen verschiebbar angeordnet ist. Der Rahmen trägt eine Werkzeugaufnahme, die gegenüber dem Rahmen um zwei horizontale Achsen schwenkbar ist, um den in der Werkzeugaufnahme anzuordnenden Bohrer in verschiedenen Winkelstellungen relativ zur Bohrschablone positionieren zu können. Hierdurch weist die Vorrichtung 5 einstellbare Freiheitsgrade auf, um verschiedene Positionen der Bohrschablone unter verschiedenen Winkeln mit dem Bohrer beaufschlagen zu können.

Der vorliegenden Erfindung liegt hiervon ausgehend die Aufgabe zugrunde, einen Arbeitstisch zur Verfügung zu stellen, der das Arbeiten mit dem darauf angeordneten Modell noch weiter verbessert und insbesondere auch das positionsgenaue Einbringen von Bohrlöchern in die Bohrschablone ermöglicht.

Diese Aufgabe wird bei einem Arbeitstisch der eingangs genannten Art dadurch gelöst, dass die bewegliche Anordnung der Werkzeugaufnahme relativ zur unteren Grundplatte und damit auch zum Werkstück derart ausgebildet ist, dass die Werkzeugaufnahme gegenüber dem Werkstück um zumindest vier Schwenkachsen schwenkbar und in Richtung zumindest einer Translationsachse verschieblich angeordnet ist. Es hat sich herausgestellt, dass ein optimales Arbeiten und vor allem Herstellen einer Bohrschablone erst dadurch möglich ist, dass die Werkzeugaufnahme, also der Bohrer nicht nur relativ zum Werkstück, sondern auch relativ zum Techniker bzw. Zahnarzt in beliebige Positionen gebracht werden kann. Durch die Berücksichtigung von vier Schwenkachsen einerseits und zumindest einer Translationsachse andererseits ist ein ergonomisch optimales Arbeiten möglich, wobei der Bearbeiter an einem festen Arbeitsplatz verbleiben kann, der die unverstellbare untere Grundplatte zugeordnet ist, und er die Position der Werkzeugaufnahme bezogen auf sich selbst beliebig verändern kann.

Auf einen konkreten apparativen Aufbau eines Arbeitstischs für Zahntechniker und Zahnärzte und insbesondere zur Erstellung einer Implantats-Bohrschablone bezogen heißt das, dass der Arbeitstisch erfindungsgemäß folgende Bauteile bzw. Merkmale umfasst: eine untere Grundplatte, eine obere Grundplatte, die um eine erste Schwenkachse relativ zur unteren Grundplatte schwenkbar gelagert ist, einen ersten Schwenkarm, der um eine zweite Schwenkachse relativ zur oberen Grundplatte schwenkbar gelagert ist, einen ersten Translationsarm, der relativ zum ersten Schwenkarm in Richtung einer ersten Translationsachse verschieblich gelagert ist, einen zweiten Schwenkarm, der relativ zum ersten Translationsarm um eine dritte Schwenkachse schwenkbar gelagert ist, einen dritten Schwenkarm, der relativ zum zweiten Schwenkarm um eine vierte Schwenkachse schwenkbar gelagert ist und der zumindest mittelbar eine Werkzeugaufnahme insbesondere für ein Bohrgerät trägt.

Hierbei lässt sich - insbesondere in Kenntnis der Position der Bohrschablone relativ zum Arbeitstisch - die Position des in die Bohrschablone einzubringenden Bohrlochs im voraus ermitteln und die zugehörige Position der Werkzeugaufnahme, also des Bohrers, relativ zum Arbeitstisch und demgemäß auch zur Bohrschablone durch die insgesamt vier Schwenkachsen und eine Translationsachse genau einstellen. Damit ergibt sich die richtige Position und Winkellage des Bohrlochs quasi von selbst, so dass diesbezüglich Bearbeitungsfehler sicher vermieden werden können.

In diesem Zusammenhang empfiehlt es sich, dass den Schwenkachsen Winkelmess- bzw. Winkelanzeigevorrichtungen und den Translationsachsen Wegmess- bzw. Wegeinstellvorrichtungen zugeordnet sind, also beispielsweise am sich jeweils bewegenden Bauteil Skalen und am benachbarten gegenüber der jeweiligen Bewegung feststehenden Bauteil Mess- bzw. Referenzpunkte, Zeiger etc. Außerdem sollte jede Bewegung, also Schwenkoder Verschiebebewegung durch eine geeignete Arretiervorrichtung blockierbar sein, wobei im Falle einer durch ein Spindelgetriebe o.ä. erzeugten Translationsbewegung das Blockieren durch das Getriebe selbst erfolgen kann.

Erfindungsgemäß ermöglicht der Arbeitstisch neben dem positionsgenauen Einbringen eines Bohrlochs auch die Verwendung zu Messzwecken: Positioniert man als Werkstück auf den Arbeitstisch ein Kiefermodell mit eingesetztem so genannten Technikerimplantat, das die Position und Orientierung eines bereits in den Kiefer eines Patienten eingesetzten Implantats aufweist, so kann man mithilfe des Arbeitstisches die Orientierung der auf das Implantat aufzusetzenden Suprakonstruktion unter Berücksichtigung der Kiefer- bzw. Zahnumgebung des Implantats ermitteln, wenn die Werkzeugaufnahme gegenüber dem Werkstück in Richtung zumindest einer weiteren Translationsachse verschieblich angeordnet ist bzw. ein zweiter Translationsarm vorgesehen ist, der relativ zum zweiten Schwenkarm in Richtung einer zweiten Translationsachse verschieblich gelagert ist. Hierbei wird ein in die Werkzeugaufnahme eingesetzter Messfühler - wobei es natürlich auch im Rahmen der Erfindung liegt, dass der Messfühler die Werkzeugaufnahme ersetzt - durch Verstellung der vier Schwenkachsen und der ersten Translationsachse so positioniert, dass er sich angrenzend an einen an das Implantat benachbarten Zahn parallel zur Zahnkronenachse erstreckt. Von dieser so erhaltenen "Nulllinie" ausgehend werden die vier Schwenkachsen und die erste Translationsachse so eingestellt, dass die zweite Translationsachse einerseits durch die Nulllinie und andererseits durch das obere aus dem Kiefermodell herausragende Ende des Technikerimplantats verläuft, also sich die Nulllinie und das obere Implantatende in einer Ebene befinden. Dies kann man sicherstellen, indem man den zweiten Translationsarm jeweils ausgehend von der Stellung des Messfühlers in der Nulllinienstellung in Richtung auf das genannte obere Implantatende bewegt.

Befindet sich der Messfühler nach Verschieben in Richtung der zweiten Translationsachse in der Position, dass er mit dem oberen Implantatende fluchtet, so entspricht seine Orientierung der gewünschten Orientierung der Achse der noch einzusetzenden Suprakonstruktion. Nun müssen lediglich der bzw. die Winkel abgelesen werden, die der Messfühler gegenüber der Achse des Implantats aufweist und schon erhält man die für die richtige Auswahl der optimalen Suprakonstruktion benötigten Winkeldaten.

Es liegt außerdem im Rahmen der vorliegenden Erfindung ein Verfahren zur Herstellung einer Bohrschablone für ein Zahnimplantat mit den folgenden Verfahrensschritten:
- Positionieren eines Kiefermodells eines Patienten an dem Arbeitstisch,
- Modellieren einer Röntgenschablone zumindest eines Teils des Kiefermodells unter Einfügung von zumindest drei Referenzpunkten (so genannten Landscapes) mit vorgegebenem gegenseitigen Abstand sowie vorgegebener Position in Bezug auf den Arbeitstisch,
- Erstellen von Röntgenbildern des mit einem Implantat zu versehenden Kiefers des Patienten mit eingesetzter Röntgenschablone,
- Vermessen und Auswerten des Röntgenbilder durch eine elektronische Auswertevorrichtung, insbesondere durch einen Computer, und Erzeugung von Messdatensätzen,
- Planen und Ermitteln des zu verwendenden Zahnimplantats und dessen Position (Ort, Winkel, Tiefe),
- Errechnen aus der Position des Zahnimplantats die Koordinaten des in die Bohrschablone einzubringenden Bohrlochs,
- Umrechnen der errechneten Koordinaten in die Winkelstellungen der vier Schwenkachsen und der Verschiebestellung der ersten Translationsachse des Arbeitstischs zur arbeitstischbezogenen Einstellung der Bohrposition der Werkzeugaufnahme,
- Modellieren einer Bohrschablone zumindest eines Teils des Kiefermodells oder Aufsetzen der als Bohrschablone zu verwendenden Röntgenschablone auf das Kiefermodell,
- Einstellen der Winkelstellungen der vier Schwenkachsen und der Verschiebestellung der ersten Translationsachse, um die Werkzeugaufnahme gegenüber der Bohrschablone in die errechnete Stellung zu bringen,
- Bohren des Bohrlochs in die Bohrschablone unter Verwendung eines in die Werkzeugaufnahme eingesetzten Bohrwerkzeugs.

Weitere Merkmale und Vorteile der vorliegenden Erfindung ergeben sich aus der nachfolgenden Beschreibung von Ausführungsbeispielen anhand der Zeichnung; hierbei zeigen
Figur 1 die Prinzipskizze eines erfindungsgemäßen Arbeitstisches und
Figur 2 eine perspektivische Ansicht eines Details eines erfindungsgemäßen Arbeitstisches.

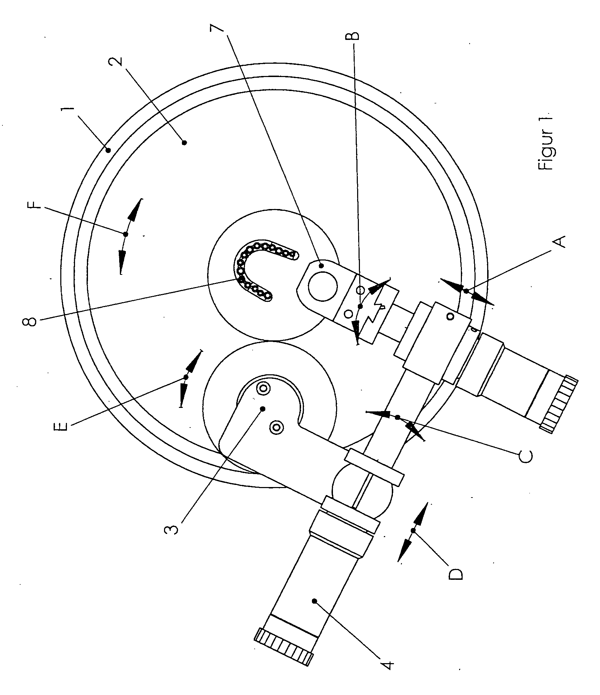

In Figur 1 ist ein Arbeitstisch dargestellt umfassend eine untere Grundplatte 1, eine obere Grundplatte 2, die um eine erste Schwenkachse F relativ zur unteren Grundplatte 1 schwenkbar gelagert ist, einen ersten Schwenkarm 3, der um eine zweite Schwenkachse E relativ zur oberen Grundplatte 2 schwenkbar gelagert ist, einen ersten Translationsarm 4, der relativ zum ersten Schwenkarm 3 in Richtung einer ersten Translationsachse D verschieblich gelagert ist, einen zweiten Schwenkarm 5, der relativ zum ersten Translationsarm 4 um eine dritte Schwenkachse C schwenkbar gelagert ist, einen dritten Schwenkarm 6, der relativ zum zweiten Schwenkarm 5 um eine vierte Schwenkachse B schwenkbar gelagert ist und der zumindest mittelbar eine Werkzeugaufnahme 7 für ein Bohrgerät trägt.

Im gezeigten Ausführungsbeispiel ist die erste Schwenkachse F in Vertikalrichtung orientiert, ist die zweite Schwenkachse E in Horizontalrichtung orientiert, ist die erste Translationsachse D in Horizontalrichtung orientiert, ist die dritte Schwenkachse C in Horizontalrichtung orientiert, ist die vierte Schwenkachse B in Horizontalrichtung orientiert und ist die zweite Translationsachse A in Horizontalrichtung orientiert. Außerdem ist der erste Schwenkarm 3 auf der oberen Grundplatte 2 angelenkt, ist der zweite Schwenkarm 5 am ersten Translationsarm 4 angelenkt und ist der zweite Schwenkarm 5 einstückig mit dem ersten Translationsarm 4 verbunden. Dadurch fällt die erste Translationsachse D mit der dritten Schwenkachse C zusammen.

Darüber hinaus ist der dritte Schwenkarm 6 am zweiten Schwenkarm 5 angelenkt. Außerdem besteht der dritte Schwenkarm 6 aus dem zweiten Translationsarm, so dass die zweite Translationsachse A mit der vierten Schwenkachse B zusammenfällt. Schließlich ist die zweite Translationsachse A rechtwinklig zur ersten Translationsachse D angeordnet und die vierte Schwenkachse B rechtwinklig zur dritten Schwenkachse C.

Bezogen auf das erfindungsgemäße Verfahren zur Herstellung einer Bohrschablone für ein Zahnimplantat sehen die Verfahrensschritte wie folgt aus:
- Positionieren eines Kiefermodells (8) eines Patienten an dem Arbeitstisch,
- Modellieren einer Röntgenschablone zumindest eines Teils des Kiefermodells unter Einfügung von zumindest drei Referenzpunkten (so genannten Landscapes) mit vorgegebenem gegenseitigen Abstand sowie vorgegebener Position in Bezug auf den Arbeitstisch,
- Erstellen von Röntgenbildern des mit einem Implantat zu versehenden Kiefers des Patienten mit eingesetzter Röntgenschablone,
- Vermessen und Auswerten des Röntgenbilder durch eine elektronische Auswertevorrichtung, insbesondere durch einen Computer, und Erzeugung von Messdatensätzen,
- Planen und Ermitteln des zu verwendenden Zahnimplantats und dessen Position (Ort, Winkel, Tiefe),
- Errechnen aus der Position des Zahnimplantats die Koordinaten des in die Bohrschablone einzubringenden Bohrlochs,
- Umrechnen der errechneten Koordinaten in die Winkelstellungen der vier Schwenkachsen (F, E, C, B) und der Verschiebestellung der ersten Translationsachse (D) des Arbeitstischs zur arbeitstischbezogenen Einstellung der Bohrposition der Werkzeugaufnahme (7),
- Modellieren einer Bohrschablone zumindest eines Teils des Kiefermodells (8) oder Aufsetzen der als Bohrschablone zu verwendenden Röntgenschablone auf das Kiefermodell,
- Einstellen der Winkelstellungen der vier Schwenkachsen (F, E, C, B) und der Verschiebestellung der ersten Translationsachse (D), um die Werkzeugaufnahme (7) gegenüber der Bohrschablone in die errechnete Stellung zu bringen,
- Bohren des Bohrlochs in die Bohrschablone unter Verwendung eines in die Werkzeugaufnahme (7) eingesetzten Bohrwerkzeugs.

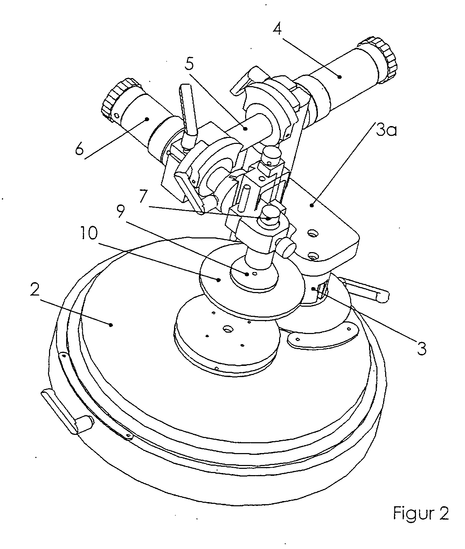

In Figur 2 ist der Arbeitstisch aus Figur 1 im perspektivischen Detail gezeigt, wobei man neben der oberen Grundplatte 2 den sich vertikal nach oben erstreckenden ersten Schwenkarm 3 mit einem im rechten Winkel angeformten horizontalen Exzenterarm 3a, der zusammen mit dem ersten Schwenkarm 3 verschwenkt wird, erkennt; außerdem den am Exzenterarm 3a angelenkten ersten Translationsarm 4 mit fluchtend zu ihm angeordneten zweiten Schwenkarm 5, der wiederum den dritten Schwenkarm 6 trägt, der gleichzeitig als zweiter Translationsarm für den Fall fungiert, dass man den Arbeitstisch als Messeinrichtung zur Ermittlung des Winkels zwischen Implantat und Suprakonstruktion verwenden will.

Aus Figur 2 erkennt man auch die jeweiligen Messskalen und Arretiervorrichtungen. Es sei noch erwähnt, dass das Kiefermodell am Arbeitstisch bzw. der oberen Grundplatte 2 mittels einer Magnethalterung festgelegt ist, die es lösbar, aber sicher festhält.

Beim Ausführungsbeispiel aus Figur 2 ist in die Werkzeugaufnahme ein Halter 9 für eine Plexiglasscheibe 10 eingesetzt, die definierte Bohrungen zum Einsetzen der Landscapes aufweist, die man zum Erstellen einer Röntgenschablone benötigt.

Zusammengefasst bietet die Erfindung den Vorteil eines Arbeitstischs, der ein ergonomisch optimales, reproduzierbares und hochgenaues Arbeiten ermöglicht.

## Patentansprüche

1. Arbeitstisch für Zahntechniker und Zahnärzte und insbesondere zur Erstellung einer Implantats-Bohrschablone mit einer ein Werkstück (8) zumindest mittelbar tragenden unteren Grundplatte (1) und einer relativ zur unteren Grundplatte (1) beweglich angeordneten Werkzeugaufnahme (7),
**dadurch gekennzeichnet,**
**dass** die bewegliche Anordnung derart ausgebildet ist, dass die Werkzeugaufnahme (7) gegenüber dem Werkstück (8) um zumindest vier Schwenkachsen (F, E, C, B) schwenkbar und in Richtung zumindest einer Translationsachse (D) verschieblich angeordnet ist.

2. Arbeitstisch nach zumindest Anspruch 1,
**dadurch gekennzeichnet,**
**dass** die Werkzeugaufnahme (7) gegenüber dem Werkstück (8) in Richtung zumindest einer weiteren Translationsachse (A) verschieblich angeordnet ist.

3. Arbeitstisch für Zahntechniker und Zahnärzte und insbesondere zur Erstellung einer Implantats-Bohrschablone, umfassend:
- eine untere Grundplatte (1),
- eine obere Grundplatte (2), die um eine erste Schwenkachse (F) relativ zur unteren Grundplatte (1 ) schwenkbar gelagert ist,
- einen ersten Schwenkarm (3), der um eine zweite Schwenkachse (E) relativ zur oberen Grundplatte (2) schwenkbar gelagert ist,
- einen ersten Translationsarm (4), der relativ zum ersten Schwenkarm (3) in Richtung einer ersten Translationsachse (D) verschieblich gelagert ist,
- einen zweiten Schwenkarm (5), der relativ zum ersten Translationsarm (4) um eine dritte Schwenkachse (C) schwenkbar gelagert ist,
- einen dritten Schwenkarm (6), der relativ zum zweiten Schwenkarm (5) um eine vierte Schwenkachse (B) schwenkbar gelagert ist und der zumindest mittelbar eine Werkzeugaufnahme (7) insbesondere für ein Bohrgerät trägt.

4. Arbeitstisch nach Anspruch 3,
**dadurch gekennzeichnet,**
**dass** ein zweiter Translationsarm (6) vorgesehen ist, der relativ zum zweiten Schwenkarm (5) in Richtung einer zweiten Translationsachse (A) verschieblich gelagert ist.

5. Arbeitstisch nach zumindest einem der vorstehenden Ansprüche,
**dadurch gekennzeichnet,**
**dass** die erste Schwenkachse (F) in Vertikalrichtung orientiert ist.

6. Arbeitstisch nach zumindest einem der vorstehenden Ansprüche,
**dadurch gekennzeichnet,**
**dass** die zweite Schwenkachse (E) in Horizontalrichtung orientiert ist.

7. Arbeitstisch nach zumindest einem der vorstehenden Ansprüche,
**dadurch gekennzeichnet,**
**dass** die erste Translationsachse (D) in Horizontalrichtung orientiert ist.

8. Arbeitstisch nach zumindest einem der vorstehenden Ansprüche,
**dadurch gekennzeichnet,**
**dass** die dritte Schwenkachse (C) in Horizontalrichtung orientiert ist.

9. Arbeitstisch nach zumindest einem der vorstehenden Ansprüche,
**dadurch gekennzeichnet,**
**dass** die vierte Schwenkachse (B) in Horizontalrichtung orientiert ist.

10. Arbeitstisch nach zumindest einem der Ansprüche 2 oder 4,
**dadurch gekennzeichnet,**
**dass** die zweite Translationsachse (A) in Horizontalrichtung orientiert ist.

11. Arbeitstisch nach zumindest einem der Ansprüche 3 bis 10,
**dadurch gekennzeichnet,**
**dass** der erste Schwenkarm (3) auf der oberen Grundplatte (2) angelenkt ist.

12. Arbeitstisch nach zumindest einem der Ansprüche 3 bis 11,
**dadurch gekennzeichnet,**
**dass** der zweite Schwenkarm (5) am ersten Translationsarm (4) angelenkt ist.

13. Arbeitstisch nach zumindest einem der Ansprüche 3 bis 12,
**dadurch gekennzeichnet,**
**dass** der zweite Schwenkarm (5) fluchtend, koaxial oder achsparallel zum ersten Translationsarm (4) angelenkt ist.

14. Arbeitstisch nach zumindest einem der Ansprüche 3 bis 12,
**dadurch gekennzeichnet,**
**dass** der zweite Schwenkarm (5) aus dem ersten Translationsarm (4) besteht oder einstückig mit diesem verbunden ist.

15. Arbeitstisch nach zumindest einem der vorstehenden Ansprüche,
**dadurch gekennzeichnet,**
**dass** die erste Translationsachse (D) mit der dritten Schwenkachse (C) zusammenfällt.

16. Arbeitstisch nach zumindest einem der Ansprüche 3 bis 15,
**dadurch gekennzeichnet,**
**dass** der dritte Schwenkarm (6) am zweiten Schwenkarm (5) angelenkt ist.

17. Arbeitstisch nach zumindest einem der Ansprüche 3 bis 16,
**dadurch gekennzeichnet,**
**dass** der dritte Schwenkarm (6) fluchtend, koaxial oder achsparallel zum zweiten Translationsarm (6) angelenkt ist.

18. Arbeitstisch nach zumindest einem der Ansprüche 3 bis 17,
**dadurch gekennzeichnet,**
**dass** der dritte Schwenkarm (6) aus dem zweiten Translationsarm (6) besteht oder einstückig mit diesem verbunden ist.

19. Arbeitstisch nach zumindest einem der vorstehenden Ansprüche,
**dadurch gekennzeichnet,**
**dass** die zweite Translationsachse (A) mit der vierten Schwenkachse (B) zusammenfällt.

20. Arbeitstisch nach zumindest einem der vorstehenden Ansprüche,
**dadurch gekennzeichnet,**
**dass** die zweite Translationsachse (A) rechtwinklig zur ersten Translationsachse (D) angeordnet ist.

21. Arbeitstisch nach zumindest einem der vorstehenden Ansprüche,
**dadurch gekennzeichnet,**
**dass** die vierte Schwenkachse (B) rechtwinklig zur dritten Schwenkachse (C) angeordnet ist.

22. Verfahren zur Herstellung einer Bohrschablone für ein Zahnimplantat unter Verwendung eines Arbeitstischs nach zumindest einem der vorstehenden Ansprüche,
**gekennzeichnet durch** die folgenden Verfahrensschritte:
- Positionieren eines Kiefermodells (8) eines Patienten an dem Arbeitstisch,
- Modellieren einer Röntgenschablone zumindest eines Teils des Kiefermodells unter Einfügung von zumindest drei Referenzpunkten mit vorgegebenem gegenseitigen Abstand sowie vorgegebener Position in Bezug auf den Arbeitstisch,
- Erstellen von Röntgenbildern des mit einem Implantat zu versehenden Kiefers des Patienten mit eingesetzter Röntgenschablone,
- Vermessen und Auswerten des Röntgenbilder **durch** eine elektronische Auswertevorrichtung, insbesondere **durch** einen Computer, und Erzeugung von Messdatensätzen,
- Planen und Ermitteln des zu verwendenden Zahnimplantats und dessen Position (Ort, Winkel, Tiefe),
- Errechnen aus der Position des Zahnimplantats die Koordinaten des in die Bohrschablone einzubringenden Bohrlochs,
- Umrechnen der errechneten Koordinaten in die Winkelstellungen der vier Schwenkachsen (F, E, C, B) und der Verschiebestellung der ersten Translationsachse (D) des Arbeitstischs zur arbeitstischbezogenen Einstellung der Bohrposition der Werkzeugaufnahme (7),
- Modellieren einer Bohrschablone zumindest eines Teils des Kiefermodells (8) oder Aufsetzen der als Bohrschablone zu verwendenden Röntgenschablone auf das Kiefermodell,
- Einstellen der Winkelstellungen der vier Schwenkachsen (F, E, C, B) und der Verschiebestellung der ersten Translationsachse (D), um die Werkzeugaufnahme (7) gegenüber der Bohrschablone in die errechnete Stellung zu bringen,
- Bohren des Bohrlochs in die Bohrschablone unter Verwendung eines in die Werkzeugaufnahme (7) eingesetzten Bohrwerkzeugs.
